# EUROPEAN PATENT APPLICATION

(11) **EP 2 172 795 A1**
(43) Date of publication of application: **07.04.2010**
(21) Application number: 08165771.0
(22) Date of filing: 02.10.2008
(51) Int. Cl.: G02B 6/255

(54) **Method of splicing microstructured optical fibers**

(71) Applicant: CCS Technology Inc., Wilmington, DE 19803 (US)
(72) Inventor: Contag, Karsten, 81373, München (DE); Kossat, Rainer, 83229, Aschau (DE); Zamzow, Bert, 82131, Gauting-Buchendorf (DE)
(74) Representative: Epping - Hermann - Fischer

(57) **Abstract**

After aligning a first and second one of the optical fibers (10, 20) respective end portions (11, 21) of the first and second one of the optical fibers (10, 20) are heated by an electric arc (EA) during a first time period to melt the respective end portions. The end face (12, 22) of at least one of the first and second one of the optical fibers (10, 20) is positioned away from a center (CL) of the electric arc (EA) by a distance (D) greater than a quarter of the width (W) of the electric arc (EA). After bringing the respective end portions (11, 21) into contact the respective end portions (11, 21) of the first and second one of the optical fibers (10, 20) are heated during a second time period to form a splice joint.

## Description

### Technical field

The present application relates to a method of splicing optical fibers by heating respective end portions of the optical fibers, and more particularly, to a method of splicing microstructured optical fibers. The application is also directed to an apparatus to splice optical fibers by heating respective end portions of the optical fibers.

### Background

In order to connect optical fibers end portions of the optical fibers are heated so that the material of the fiber ends begins to melt. The heated end portions of the optical fibers are brought into contact to weld the fiber ends and form a continuous optical fiber. A quality of the splice joint is characterized by the amount of a splice loss measured when light is transmitted via the splice area of the optical fibers. The splice loss is increased in particular, if the inner structure of the optical fibers to be spliced is modified during the splice process.

There is a need to provide a method of splicing optical fibers by which a significant increase of the splice loss is avoided. It is also desirable to have an apparatus to splice optical fibers which allows to perform a splice process without significantly increasing a splice loss at the splice area.

Summary

According to a method of splicing optical fibers a first one of the optical fibers is aligned with a second one of the optical fibers, said first one of the optical fibers and said second one of the optical fibers each having a respective end portion and a respective end face. The respective end portions of the first and second one of the optical fibers are heated by an electric arc during a first time period to melt the respective end portions. The end face of at least one of the first and second one of the optical fibers is positioned away from a center of the electric arc by a distance greater than a quarter of the width of the electric arc measured in a direction of a longitudinal axis of the at least one of the first and second one of the optical fibers. In a next step the respective end portions of the first and second one of the optical fibers are contacted. The respective end portions of the first and second one of the optical fibers are heated during a second time period to form a splice joint.

Another embodiment of a method of splicing optical fibers comprises a step of aligning a first and second one of the optical fibers, said first one of the optical fibers and said second one of the optical fibers each having a respective end portion and a respective end face. The respective end portions of the first and second one of the optical fibers are heated by an electric arc during a first time period to melt the respective end portions of the first and second one of the optical fibers, said electric arc contacting the respective end faces of the first and second one of the optical fibers. In a next step the respective end faces of the first and second one of the optical fibers are contacted.

The respective end portions of the first and second one of the optical fibers are heated by the electric arc to form a splice joint during a second time period, said electric arc being activated for a time of less than 0.5 seconds.

According to another embodiment of a method of splicing optical fibers a first and second one of the optical fibers are aligned. At least one of a first and second electrode is moved so that the first and second electrode is positioned away from each other by a distance of less than 2.0 mm. The first and second one of the optical fibers are heated by an electric arc ignited between the electrodes to splice the first and second one of the optical fibers together.

An apparatus to splice optical fibers comprises electrodes to ignite an electric arc to heat the optical fibers. The electrodes are positioned so that a distance between the electrodes is less than 2.0 mm.

### Brief Description of the Drawings

Hereinbelow embodiments of the method of splicing optical fibers as well as embodiments of the apparatus to splice the optical fibers are described in more detail in conjunction with the appended drawings.
- Figure 1: shows an embodiment of a microstructured optical fiber.
- Figure 2: shows an embodiment of an optical fiber.
- Figure 3A: shows a step of aligning end portions of optical fibers.
- Figure 3B: shows a step of heating end portions of optical fibers during a pre-fusion process.
- Figure 3C: shows a step of splicing end portions of optical fibers to form a splice joint.
- Figure 4A: shows a pre-fusion process to melt a material of end portions of optical fibers.
- Figure 4B: shows a main-fusion process to form a continuous optical fiber.
- Figure 5: shows a first embodiment of an apparatus to splice optical fibers.
- Figure 6: shows a second embodiment of an apparatus to splice optical fibers.
- Figure 7: shows a third embodiment of an apparatus to splice optical fibers.

### Detailed Description

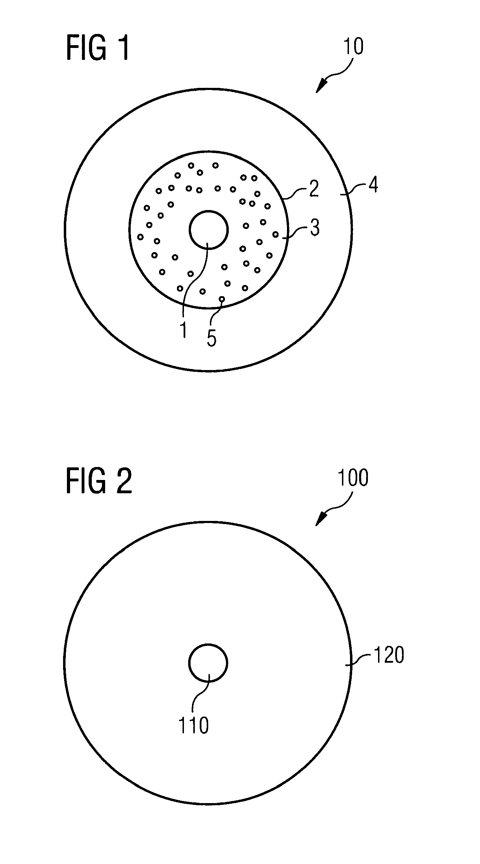

Figure 1 shows an embodiment of a microstructured optical fiber 10. The microstructured optical fiber comprises a light guiding core region 1 disposed about a longitudinal axis A10 and a cladding region 2 surrounding the core region. The core region 1 and the cladding region 2 may be comprised of silica. The optical fiber 10 may also include germania or fluorine to adjust a refractive index of the core and of the cladding. The core region may also be silica doped with one or more dopants to provide a positive refractive index relative to pure silica.

As illustrated in Figure 1, the core region 1 is hole-free. The cladding region 2 comprises an inner area 3 including a plurality of holes 5 and a hole-free outer area 4. The inner area 3 has for example a radial width which is not less than 0.5 µm and not greater than 20 µm. The hole-containing region may consist of undoped (pure) silica to achieve a decreased refractive index. The inner area 3 may also comprise doped silica, for example fluorine-doped silica having a plurality of holes.

The holes 5 may be formed such that greater than 95 % and preferably all of the holes exhibit a mean hole size in the cladding which is less than 1550 nm. A diameter of the holes in the optical fiber may be less than 7000 nm and the number of holes may be fewer than 5000 holes. The holes are for example stretched along the length, in a direction parallel to a longitudinal axis A10 of the optical fiber, but do not extend the length of the entire fiber. The holes may include air or any other gas, for example an inert gas.

The microstructured optical fiber may be formed as a photonic crystal fiber containing a regular arrangement of the holes or may also be formed of non-periodically disposed holes which are randomly or non-periodically distributed within the inner area 3. The holes are provided to adjust the manner in which light is guided down the core of the fiber. The optical fiber 10 is capable of single mode transmission at one or more wavelengths in one or more operating wavelength ranges. The core region and the cladding region provide improved bend resistance, and single mode operation at wavelengths which are for example greater than or equal to 1260 nm.

If end portions of microstructured optical fibers are heated, the holes 5 within the inner area 3 of the cladding 2 may change their shape or even collapse. However, if the structure of the holes, i.e. the size and/or the disposition of the holes, is modified the physical properties of the optical fiber are also changed. The modification of the structure of the holes 5 caused by a heating process during splicing the optical fibers may cause an increase of the splice loss and lead to an increased attenuation at the splice joint.

The microstructured optical fiber 10 may be fused with an optical fiber also having a hole-containing microstructure, and may also be spliced with a conventional optical fiber 1000 as shown in Figure 2. With respect to Figure 2, an embodiment of an optical fiber 1000 comprises a core section 1100 and a cladding section 1200. The core section 1100 and the cladding section 1200 may be formed of silica, the core section and the cladding section having different refraction indices. The difference in the indices of refraction may be achieved by providing the core section with a higher concentration of dopants.

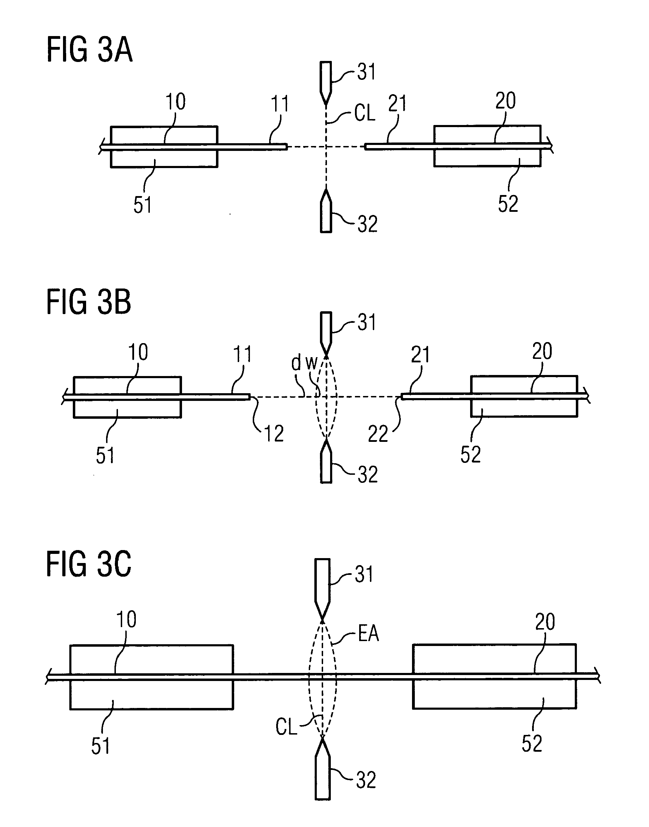

Figures 3A - 3C illustrate an embodiment of a method of splicing optical fibers 10, 20 by a fusion splicing apparatus 100a. The optical fibers 10 and 20 are positioned in moveable fiber holders 51 and 52. A heating device 30 is provided comprising electrodes 31 and 32 which are placed opposite to each other. If a splice current is activated an electric arc EA is ignited along center line CL between electrodes 31, 32.

The optical fibers have to be aligned before the fiber ends are spliced. Figure 3A illustrates an alignment process of optical fibers 10 and 20. The fiber holders 51 and 52 are moved so that the optical fibers 10 and 20 are aligned with each other.

Figure 3B illustrates the positioning of optical fibers 10, 20 during a pre-fusion process. If both of the optical fibers 10, 20 are formed as microstructured optical fibers, the optical fibers 10, 20 are moved by the fiber holders 51, 52 so that an end portion 11 of optical fiber 10 as well as an end portion 21 of optical fiber 20 are symmetrically positioned in relation to a center line CL, the electric ary being ignited along the center line. The respective end faces 12, 22 of the microstructured optical fibers 10, 20 are displaced a distance D away from the center line CL.

If optical fibers of different inner structure are spliced with each other, such as the microstructured optical fiber 10 illustrated in Figure 1 and conventional optical fiber 1000 as shown in Figure 2, the microstructured optical fiber 10 is positioned so that the end face 11 of microstructured optical fiber 10 is prevented from contacting the electric arc EA. The fiber holder 51 is moved so that the end face 11 of microstructured optical 10 is positioned in the distance D away from the center line CL. As concerns the conventional optical fiber, the end portion of the conventional optical fiber may be moved so that the electric arc contacts the end face of the conventional optical fiber.

The distance D between end face 12 of microstructured optical fiber 10 and the center line CL of the electric arc is at least a quarter of the width W of the electric arc EA and is preferably at least half of the diameter W of the electric arc measured in a direction along the longitudinal axis A10 of the microstructured optical fiber 10. If the opposed optical fiber 20 is also formed as a microstructured optical fiber, the fiber holder 52 is moved so that a distance D between end face 22 of microstructured optical fiber 20 and the center line CL of the electric arc is at least a quarter of the width W of the electric arc EA and is preferably at least half of the diameter W of the electric arc determined in a direction along the longitudinal axis A20 of the microstructured optical fiber 20. During the pre-fusion process the distance between the center line CL and the end face of the microstructured optical fiber is for example higher than 50 µm and preferably higher than 200 µm.

With reference to Figure 3B a respective end face 12 and 22 of the microstructured optical fibers 10 and 20 is not directly exposed to the electric arc, but is prevented from contacting the electric arc. The end faces of microstructured optical fibers 10, 20 are laterally heated by the heat radiation of the electric arc EA. The indirect heating prevents a modification of the size and a modification of the arrangement of the holes 5, especially a shrinkage or a collapse of the holes.

Figure 3C illustrates the heating of the end portions 11, 21 of optical fibers 10, 20 during the main fusion process to form a splice joint between the microstructured optical fibers. The microstructured optical fibers are moved towards each other to bring the end faces 12 and 21 into contact. A splice current to activate the igniting of the electric arc between electrodes 31, 32 is adjusted so that the electric arc is ignited with a low energy. The igniting of the electric arc with a low energy may be achieved by a splice current which is turned on for a low time duration.

On the other hand, it is also possible to generate a high splice current for a short time duration. The splice current to ignite the electric arc may for example be selected being higher by 10 % than a conventional splice current used for splicing a standard single mode fiber as shown in Figure 2. Assuming the splice current used to splice conventional optical fibers is about 14.5 mA, the splice current to form a splice joint between optical fibers wherein at least one of the optical fiber is a microstructured optical fiber may be higher than 16.0 mA. The splice current is preferably selected to be higher by 20 % than the conventional splice current to splice standard single mode fibers. A preferred value of the splice current is about 18 mA.

The time duration in which the splice current is turned on to activate the igniting of the electric arc is adjusted to be lower than the time duration used for a main splice process of a standard single mode optical fiber. The splice time is selected to be at least lower than 0.5 seconds and preferably lower than 0.2 seconds.

According to the splice method illustrated in Figure 3A to 3C the microstructured optical fibers 10 and 20 are laterally heated so that the electric arc EA is prevented from contacting the end faces 12 and 22 of the microstructured optical fibers. The end portions 11 and 12 of the microstructured optical fibers are heated by a heat radiation generated by the electric arc. The heat radiation of the electric arc is directed to the end faces 12 and 22 of the respective microstructured optical fibers from one side which results in a large temperature gradient being effective in a longitudinal direction of the optical fibers. By laterally heating the end faces 11 and 12 of the optical fibers 10 and 20, the area of the optical fibers in which the softening temperature of the material of the microstructured optical fibers, i.e. the temperature at which the material of the microstructured optical fiber begins to melt, is exceeded may be kept small.

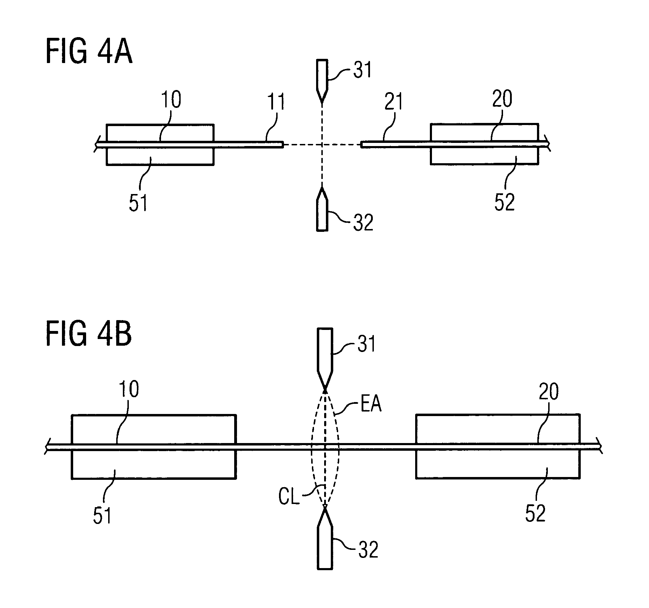

Figures 4A and 4B illustrate another embodiment of a method to splice optical fibers wherein at least one of the optical fibers is configured as a microstructured optical fiber. The splice apparatus 100b comprises electrodes 31, 32 to generate an electric arc EA to heat the microstructured optical fibers 10, 20. The microstructured optical fibers are fixed in fiber holders 51 and 52.

Figure 4A shows a pre-fusion process to melt the respective fiber ends 11, 21 of optical fibers 10, 20. As shown in Figure 4A the fiber holders 51 and 52 are moved during the pre-fusion process so that the microstructured optical fibers are aligned with each other. An electric arc EA is ignited to soften the material of the fiber ends. During the pre-fusion process the respective end faces 12 and 22 of the microstructured optical fibers 10 and 20 are brought into contact. The end faces of the optical fibers are positioned to be in contact with the ignited electric arc EA1.

Figure 4B illustrates a main fusion process to splice the optical fibers 10 and 20. During the main fusion process the splice current to activate the electric arc EA is adjusted to be higher by at least 10 % than a splice current used to splice conventional single mode fibers as shown in Figure 2. If one assumes a splice current to splice conventional single mode fibers being about 14.5 mA, the splice current of the main fusion process to splice optical fibers wherein at least one of the optical fibers is formed as a microstructured optical fiber is selected to be higher than 16.0 mA. In a preferred embodiment the splice current is higher than 20 % of the splice current used to form a splice joint of conventional single mode optical fibers. A preferred value of the splice current during the main fusion process is higher than 18 mA.

The splice time during which the splice current is activated to ignite the electric arc is lower than 0.5 seconds, and preferably lower than 0.2 seconds. The use of a low energy of the electric arc during the main splice process ensures that the area of the microstructured optical fibers in which the softening temperature is exceeded is very small. Hence, a modification of the inner structure of the optical fibers only occurs in a small area at the respective fiber ends.

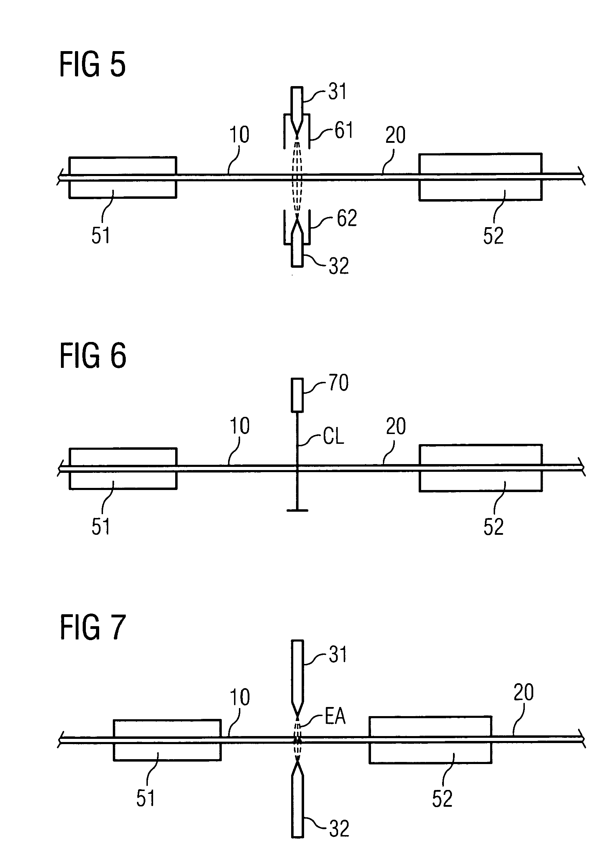

Figure 5 shows an embodiment of a fusion splicer comprising a device to modify a form of the electric arc. The device to modify the form of the electric arc may be an electric field generator 61 or a magnetic field generator 62. The generators are disposed around the electrodes 31 and 32. The generation of the electric or magnetic field allows to modify a width of the electric arc.

Figure 6 illustrates an embodiment of a fusion splicer comprising a laser device 70 to generate a laser beam. The microstructured optical fibers 10 and 20 are heated by the laser beam during a pre-fusion process to melt respective end portions of the optical fibers. The laser is activated during the main fusion process to heat the fiber ends to splice the optical fibers.

The embodiments of the fusion splicer shown in Figure 5 and Figure 6 allow that the extension of the ignited electric arc to heat the optical fibers is very low. Due to the low diameter of the electric arc, the microstructured optical fibers may be positioned close to the center line CL of the electric arc without being in contact with the electric arc.

Figure 7 illustrates an embodiment of a fusion splicer having a reduced distance of the electrodes. Conventional fusion splicers comprise electrodes arranged in a distance of between 3 mm to 4 mm. The large distance between the electrodes causes a large diameter of the electric arc which ensures that a large heating zone is generated. A fusion splicer having a large distance between the electrodes is used to splice optical fibers having different mode field diameter.

The fusion splicer shown in Figure 7 comprises electrodes 31, 32 disposed so that a distance between the electrodes is less than 2 mm. The low distance between the electrodes allows that the width of the electric arc is reduced. Consequently, the width of the area of the microstructured optical fibers in which the holes located in the cladding region of the microstructured optical fibers are affected by the heat of the electric arc is also reduced.

The methods shown in Figures 3A to 3C and 4A, 4B allow that the area of the optical fiber in which the arrangement and the structure of the holes is affected by the heat generated by the electric arc is small. The embodiments of the fusion splicers shown in Figures 5, 6 and 7 ensure that an electric arc may be generated having a small extension. The small extension of the electric arc allows to dispose the end faces of the optical fibers close to a center line of the electric arc without being in contact with the electric arc.

The positioning of the microstructured optical fiber in a distance of at least a quarter of the width of the electric arc, the heating of the fiber ends with an electric arc having a low heating energy and the reduction of the extension of the electric arc enables that a modification of the inner structure of the optical fibers happens in a limited area in a longitudinal direction of the optical fibers. Consequently, the area located near the splice joint in which the physical properties of the optical fibers are modified is reduced so that a splice loss occurring at the splice zone is kept small.

## Claims

1. A method of splicing optical fibers, comprising:
- aligning a first one of the optical fibers (10) with a second one of the optical fibers (20), said first one of the optical fibers and said second one of the optical fibers each having a respective end portion (11, 21) and a respective end face (12, 22),
- heating the respective end portions (11, 21) of the first and second one of the optical fibers (10, 20) by an electric arc (EA) during a first time period to melt the respective end portions,
- positioning the end face (12, 22) of at least one of the first and second one of the optical fibers (10, 20) away from a center (CL) of the electric arc (EA) by a distance (D) greater than a quarter of the width (W) of the electric arc (EA) measured in a direction of a longitudinal axis (A10) of the at least one of the first and second one of the optical fibers, then
- contacting the respective end portions (11, 21) of the first and second one of the optical fibers (10, 20),
- heating the respective end portions (11, 21) of the first and second one of the optical fibers (10, 20) during a second time period to form a splice joint.

2. The method according to claim 1,
wherein the distance (D) is more than 50 µm.

3. The method according to claim 1 or 2,
wherein the second time period is shorter than 0.5 seconds.

4. The method according to claim 3,
wherein the first and second one of the optical fibers (10, 20) are symmetrically positioned in relation to the center (CL) of the electric arc (EA) during the first time period.

5. A method of splicing optical fibers, comprising:
- aligning a first and second one of the optical fibers (10, 20), said first one of the optical fibers and said second one of the optical fibers each having a respective end portion (11, 21) and a respective end face (12, 22),
- heating the respective end portions (11, 21) of the first and second one of the optical fibers (10, 20) by an electric arc (EA) during a first time period to melt the respective end portions of the first and second one of the optical fibers (10, 20), said electric arc (EA) contacting the respective end faces (11, 21) of the first and second one of the optical fibers (10, 20), then
- contacting the respective end faces (12, 22) of the first and second one of the optical fibers,
- heating the respective end portions (11, 21) of the first and second one of the optical fibers (10, 20) by the electric arc (EA) to form a splice joint during a second time period, said electric arc (EA) being activated for a time of less than 0.5 seconds.

6. The method according to claim 5,
generating an electric or a magnetic field to modify a shape of the electric arc (EA).

7. The method according to any of claims 1 to 6, comprising:
igniting the electric arc (EA) by a splice current being higher than 16 mA during the second time period.

8. The method according to any of claims 1 to 7, comprising:
igniting the electric arc (EA) by a splice current being lower than 16 mA during the first time period.

9. The method according to any of claims 1 to 8, comprising:
activating the electric arc (EA) for a time of less than 0.2 seconds during the second time period.

10. The method according to any of claims 1 to 9,
igniting the electric arc (EA) by a splice current being higher than 18 mA during the second time period.

11. A method of splicing optical fibers, comprising:
- aligning a first and second one of the optical fibers (10, 20),
- moving at least one of a first and second electrode (31, 32) so that the first and second electrode (31, 32) being positioned away from each other by a distance of less than 2.0 mm,
- heating the first and second one of the optical fibers (10, 20) by an electric arc (EA) ignited between the electrodes (31, 32) to splice the first and second one of the optical fibers (10, 20) together.

12. The method according to any of claims 1 to 11,
the at least one of the first and second one of the optical fibers (10) being a microstructured optical fiber having a light guiding core region (1) arranged parallel to the longitudinal axis (A10) of the microstructured optical fiber, and a cladding region (2) disposed around the light guiding core region (1), the cladding region (2) comprising a plurality of holes (5).

13. An apparatus to splice optical fibers, comprising:
- electrodes (31, 32) to ignite an electric arc (EA) to heat the optical fibers (10, 20),
- said electrodes (31, 32) being positioned so that a distance between said electrodes (31, 32) is less than 2.0 mm.

14. The apparatus according to claim 13, comprising:
one of an electric or magnetic field generator (61, 62) to modify a shape of said electric arc (EA).

15. The apparatus according to any of claims 13 or 14, comprising:
- at least one supporting device (41, 42) to support at least one of the electrodes (31, 32),
- said supporting device (41, 42) being moveable to position the electrodes away from each other by a distance of more than 2.0 mm.
